# DEMANDE DE BREVET EUROPEEN

(11) **EP 0 764 680 A1**
(43) Date de publication de la demande: **26.03.1997**
(21) Numéro de dépôt: 96401961.6
(22) Date de dépôt: 13.09.1996
(51) Int. Cl.: C08J 5/18, C09K 19/54, G02F 1/1333

(54) **Procédé de fabrication de film de matériau à base de polymère**

(30) Priorité: 19.09.1995 FR 9510951
(71) Demandeur: THOMSON-CSF, 75008 Paris (FR)
(72) Inventeur: Lipskier, Jean-François, 92402 Courbevoie Cedex (FR)
(74) Mandataire: Guérin, Michel

(57) **Abrégé**

L'invention concerne un procédé de fabrication de film de matériau à base de polymère particulièrement bien adapté à des films de polymères réticulés à porosité ouverte.

Ce procédé comprend les étapes suivantes :
- la réalisation d'une cellule (C) comportant entre un substrat (S₁) et un substrat (S₂), une composition comprenant un précurseur du polymère (P), au moins un des substrats (S₁) et/ou (S₂) étant soluble dans un solvant (Σ₁) et/ou un solvant (Σ₂), ledit solvant (Σ₁) et/ou ledit solvant (Σ₂) étant non solvant du polymère (P) ;
- la polymérisation du polymère (P) à l'intérieur de la cellule (C) ;
- l'immersion de la cellule (C) dans le solvant (Σ₁) et/ou le solvant (Σ₂), de manière à éliminer le substrat (S₁) et/ou le substrat (S₂).

Applications : Dispositifs à cristal liquide, capteurs moléculaires.

## Description

Le domaine de l'invention est celui des matériaux à base de polymère et notamment des matériaux comprenant des polymères réticulés à porosité ouverte, permettant un accès aisé à l'intérieur des pores.

La présente invention concerne plus précisément un procédé permettant de mettre en oeuvre des matériaux polymères (organiques ou inorganiques) sous la forme de films minces d'épaisseur contrôlée.

En général, il est possible d'obtenir des films minces de matériaux polymères à partir de compositions liquides à base de pré-polymères et d'agents réticulant, déposées sur des substrats, par centrifugation, par sérigraphie, à la brosse ou au pinceau, sous réserve que la viscosité de ces compositions soit suffisante pour éviter que ces compositions ne s'écoulent avant l'étape de polymérisation conduisant à la formation d'un film solide de polymère.

Néanmoins, dans certains cas, ces techniques ne sont pas envisageables lorsque l'on dispose de compositions de trop faible viscosité, ou de compositions conduisant à la formation de films de polymère trop fins.

Dans ces cas de figure, on confine classiquement la composition liquide dans une cellule entre deux substrats S₁ et S₂ ; l'épaisseur de la cellule pouvant être calibrée grâce à des cales d'épaisseur contrôlée. La composition liquide est alors polymérisée au sein de la cellule. La polymérisation peut être de type thermique, ou photochimique si l'un des substrats est transparent au rayonnement utilisé pour la photopolymérisation.

Cette technique permet d'obtenir des films homogènes, d'épaisseur bien calibrée, néanmoins elle présente l'inconvénient de confiner le film de polymère entre deux substrats alors que dans certaines applications il est nécessaire de pouvoir retirer un des deux substrats pour faire diffuser librement des espèces chimiques au sein du polymère formé.

Ceci est notamment le cas dans des dispositifs électrooptiques à base de film de polymère dans lequel sont dispersées des molécules de cristal liquide.

En effet il peut être particulièrement intéressant de synthétiser du polymère en présence de cristal liquide _{χ}Lo, puis d'éliminer la phase fluide de cristal liquide contenant également des impuretés de polymérisation, pour remplir à nouveau le film de polymère poreux avec du cristal liquide propre.

Dans d'autres applications telles que celles concernant des capteurs surfaciques moléculaires il est nécessaire d'avoir une couche sensible, en contact avec un milieu extérieur chargé en entités que l'on cherche à détecter. De tels capteurs peuvent notamment être des capteurs à ondes acoustiques de surface comprenant une couche sensible déposée sur un substrat piézoélectrique muni de jeux d'électrodes interdigitées capables de créer des ondes acoustiques de surface se propageant au niveau de la couche sensible. La couche sensible peut être un film de matériau à empreintes moléculaires à base de polymère réticulé comprenant des sites poreux sélectifs adaptés à la capture d'entités très spécifiques.

Dans ces différentes applications citées à titre non limitatif, on est donc amené à dégager l'un des substrats de la cellule. Cependant si l'on ne prend aucune précaution particulière, le film de polymère qui adhère aux parois, se déchire lorsqu'on cherche à retirer l'un des substrats. Afin de pallier cet inconvénient, on peut utiliser des substrats préalablement traités à l'aide d'agents tensio-actifs de façon à diminuer l'énergie de surface. Ce type de traitement affecte néanmoins les propriétés de mouillage des substrats par la composition liquide initiale et peut nuire à la formation d'un film homogène de bonne qualité.

Pour résoudre le problème du retrait de l'un au moins des substrats, la présente invention propose un procédé utilisant l'emploi d'une ou plusieurs couches sacrificielles comme substrat, lesdites couches sacrificielles étant solubles dans un solvant qui est non solvant du film de polymère préalablement formé au sein d'une cellule comprenant une composition initiale renfermant un pré-polymère ou précurseur du polymère.

Plus précisément, l'invention a pour objet un procédé de fabrication de film de matériau à base de polymère P, caractérisé en ce qu'il comprend les étapes suivantes :
- la réalisation d'une cellule comportant entre un substrat S₁ et un substrat S₂, une composition comprenant un précurseur du polymère P, au moins un des substrats S₁ et/ou S₂ étant soluble dans un solvant Σ₁ et/ou un solvant Σ₂, ledit solvant Σ₁ et/ou ledit solvant Σ₂ étant non solvant du polymère P;
- la polymérisation du polymère P à l'intérieur de la cellule C ;
- l'immersion de la cellule C dans le solvant Σ₁ et/ou le solvant Σ₂, de manière à éliminer le substrat S₁ et/ou le substrat S₂.

L'invention est particulièrement intéressante dans le cadre de polymère réticulé.

En effet, dans le cas de polymère réticulé et donc insoluble à tout solvant, la dissolution de l'un des substrats ne présente aucune menace d'attaque dudit film de polymère réticulé.

Il peut s'agir de polymère réticulé poreux renfermant au sein de ses pores du cristal liquide dispersé _{χ}L. Dans ce cadre, l'invention a aussi pour objet un procédé de fabrication de film de matériau à base de polymère P caractérisé en ce qu'il comprend les étapes suivantes :
- la réalisation d'une cellule C comportant entre un substrat S₁ et un substrat S₂, une composition comprenant un monomère du polymère P et du cristal liquide _{χ}Lo ;
- la polymérisation du monomère du polymère P ;
- l'élimination d'un des deux substrats par la mise en solution de la cellule C dans le solvant dudit substrat ;
- l'élimination du cristal liquide _{χ}Lo dans le polymère P par l'immersion du film de polymère P et du substrat restant, dans un solvant Σₒ du cristal liquide _{χ}Lo ;
- l'introduction de cristal liquide _{χ}L dans le film de polymère P.

L'invention a aussi pour objet un dispositif électrooptique dont la réalisation utilise un procédé de fabrication de film selon l'invention. Plus précisément dans ce cadre l'invention a pour objet un dispositif électrooptique comprenant entre un substrat S₁ et un substrat S₃ un film de polymère dans lequel est dispersé du cristal liquide _{χ}L caractérisé en ce que :
- les substrats S₁ et S₃ comprennent des électrodes de commande de champ électrique à appliquer sur le film de polymère ;
- le film de polymère est obtenu selon le procédé évoqué ci-dessus.

Le procédé selon l'invention peut également avantageusement être utilisé pour obtenir des films de matériaux à empreintes moléculaires, macroporeux présentant des cavités dont la configuration stérique et fonctionnelle est spécifiquement adaptée à la capture d'entités particulières G' au sein des cavités.

Et notamment l'invention a aussi pour objet un procédé de fabrication de film de matériau à base de polymère P, caractérisé en ce qu'il comprend les étapes suivantes :
- la réalisation d'une cellule C comportant entre un substrat S₁ et un substrat S₂, une composition comprenant des monomères fonctionnels précurseur du polymère P et des molécules gabarit G formant avec les monomères des interactions spécifiques ;
- la polymérisation des monomères fonctionnels ;
- l'élimination d'un des deux substrats par la mise en solution de la cellule C dans le solvant dudit substrat ;
- l'élimination des molécules G par la mise en solution du film de polymère P et du substrat restant, dans un solvant Σ_{G} des molécules G.

Les molécules G servant à la fabrication du film sont identiques ou très similaires aux molécules G' que le film de polymère ainsi formé sera en mesure de piéger ultérieurement.

Ce type de film de matériau à empreintes moléculaires étant particulièrement intéressant dans des capteurs moléculaires, l'invention a également pour objet un capteur moléculaire comprenant un film de matériau à empreintes moléculaires à base de polymère réticulé macroporeux déposé à la surface d'un substrat S₁ caractérisé en ce que :
- le substrat S₁ est un matériau piézoélectrique comprenant de part et d'autre du film de matériau à empreintes moléculaires, deux séries d'électrodes SE₁ et SE₂ de manière à induire et récupérer des ondes acoustiques de surface ;
- le film de matériau à empreintes moléculaires est obtenu selon le procédé évoqué précédemment.

L'invention sera mieux comprise et d'autres avantages apparaîtront à la lecture de la description qui va suivre donnée à titre non limitatif, et grâce aux figures parmi lesquelles :
- la figure 1 schématise un dispositif électrooptique comprenant un film de polymère dans lequel est dispersé du cristal liquide, obtenu selon un procédé de fabrication de l'invention ;
- la figure 2 schématise un capteur moléculaire comprenant comme couche sensible un film de polymère macroporeux obtenu selon un procédé de l'invention.

D'une manière générale, le procédé de fabrication, selon l'invention, de film de matériau à base de polymère comprend les différentes étapes suivantes :

Dans un premier temps on réalise de manière classique une cellule C, en déposant sur un premier substrat S₁, une composition liquide contenant le précurseur du polymère ainsi que d'éventuels agents de polymérisation ou d'autres molécules nécessaires aux applications visées. Le second substrat S₂ peut alors être déposé à la surface de la composition liquide recouvrant le premier substrat S₁.

Selon la viscosité de la composition liquide, celle-ci peut dans certains cas être introduite par capillarité dans une cellule C vide, préalablement élaborée avec les deux substrats S₁ et S₂, séparés par des cales d'épaisseur.

Dans un second temps la composition liquide enfermée dans la cellule C est polymérisée.

Il peut s'agir selon les cas, d'une polymérisation par voie thermique nécessitant le chauffage de la cellule C, ou d'une photopolymérisation, réalisée par irradiation de la cellule, l'un des substrats étant transparent au rayonnement utilisé lors de la polymérisation.

Dans un troisième temps, le polymère P étant formé, l'ensemble de la cellule C est immergé dans un solvant de l'un des substrats S₁ ou S₂ et non solvant du polymère P de manière à dégager une surface du film de polymère préalablement formé. Cette opération peut être renouvelée pour éliminer le second substrat si cela s'avère nécessaire.

Nous allons décrire de manière plus précise l'invention dans le cadre de la fabrication de film de polymère à cristal liquide dispersé, utilisé dans des dispositifs électrooptiques. En effet, les matériaux de type polymère à cristal liquide présentent le grand intérêt de pouvoir passer d'un état transparent à un état diffusant en fonction de la tension électrique qui leur est appliquée.

De manière générale, de tels dispositifs sont le plus souvent réalisés en polymérisant une composition liquide comprenant des monomères réticulables et des molécules cristal liquide, entre deux substrats solides, de façon à obtenir un film composite présentant une phase solide constituée de polymère insoluble dans tout solvant, et une phase liquide constituée essentiellement de cristal liquide, mais aussi de monomères, de fragments d'amorceurs de polymérisation, de radicaux libres piégés ou d'autres impuretés résiduelles solubles dans le cristal liquide.

Ces impuretés sont généralement préjudiciables au fonctionnement du dispositif, en ce qu'elles diminuent la résistance électrique du matériau et en ce qu'elles sont susceptibles de conduire, à la longue, à des modifications chimiques, induisant ou accélérant un vieillissement du dispositif. Par ailleurs, l'adjonction de colorants dichroïques, qui permettrait d'améliorer les performances des dispositifs ou d'en étendre le champ d'application est difficile. En effet, ces colorants sont généralement fortement absorbants dans le visible et l'ultra-violet, et nuisent donc à l'efficacité de la polymérisation lorsque celle-ci est conduite par voie photochimique ; par ailleurs, ces colorants sont aisément dégradés par les radicaux libres formés au cours de la polymérisation. Il est donc particulièrement souhaitable de pouvoir "purifier" le composite obtenu, en remplaçant la phase fluide par du cristal liquide "propre", contenant éventuellement un colorant dichroïque. On peut également profiter de cette opération pour modifier chimiquement la surface de la phase solide, afin d'améliorer les propriétés dynamiques du dispositif comme cela est décrit par la demanderesse dans la demande de brevet publiée sous le n° 2 703 690.

Une première technique consiste à "laver" le composite à l'aide d'un solvant du cristal liquide. Le solvant est ensuite évaporé, laissant un film poreux de polymère insoluble. La nouvelle composition à base de cristaux liquides, comprenant éventuellement un colorant dichroïque, est alors introduite par diffusion dans le film de polymère poreux. Il est néanmoins préférable d'éliminer le solvant du cristal liquide par séchage en phase supercritique et non par simple évaporation, afin de ne pas dégrader le film de polymère poreux sous l'effet des forces de capillarité s'exerçant à l'interface liquide-vapeur, comme l'a explicité la demanderesse dans la demande de brevet n° 94 07572.

Dans ces différents procédés, il est nécessaire de faire circuler des fluides (solvant en phase liquide, gazeuse ou supercritique, cristal liquide, réactifs, ...). Il est donc très avantageux de pouvoir exposer la surface du matériau particulièrement lorsqu'il s'agit de réaliser des dispositifs de grandes dimensions.

Dans un exemple de film pouvant être utilisé dans ces dispositifs électrooptiques on peut utiliser comme composition liquide de départ, le mélange homogène suivant :
- du monomère PN 350 (Merck BDM) contenant 2,5 % de photoamorceur Darocure 1173 ;
- du cristal liquide TL 202 (Merck).

Ce mélange étant introduit par capillarité entre les deux substrats S₁ et S₂, séparés par des cales d'épaisseur. Le substrat S₁ peut être transparent ou réfléchissant selon les applications visées et muni d'électrodes de commande. Le substrat S₂ est de préférence relativement mince et constitué d'un matériau insoluble dans la composition liquide initiale, mais soluble dans un solvant Σ₂.

La cellule ainsi formée est ensuite immergée dans une grande quantité de solvant Σ₂ de façon à dissoudre le substrat S₂. Le solvant Σ₂ peut avantageusement être de l'éther éthylique, qui possède la propriété de ne pas perturber notablement la phase solide du composite (absence de gonflement ou de rupture des parois des pores), dans le cas où le substrat S₂ est de type film de poly-(éthylméthacrylate) ou film de poly-(n-propylméthacrylate). Un tel substrat S₂ présente l'avantage d'être transparent, ce qui permet une polymérisation par voie photochimique.

Selon un procédé de l'invention, l'étape de dissolution du substrat S₂ est suivie d'une étape d'élimination de la phase fluide comprenant le cristal liquide initial _{χ}Lo afin de purifier la matrice polymère pour la remplir à nouveau de cristal liquide pur _{χ}L. Cette élimination est obtenue par l'immersion du film de polymère dans lequel est dispersé le cristal liquide _{χ} Lo, dans un solvant Σₒ.

On peut choisir le solvant Σ₂ tel qu'il puisse également être solvant du cristal liquide _{χ}Lo.

Ceci est notamment le cas de l'éther éthylique capable de dissoudre le cristal liquide TL 202.

Dans ce cas les étapes de dissolution du substrat S₂ et d'élimination du cristal liquide _{χ}Lo sont confondues en une seule et même étape.

Généralement, après ces étapes, le film poreux de polymère comprend encore des quantités non négligeables de solvant Σ₂ piégé au sein des pores du polymère réticulé. C'est pourquoi on peut avantageusement procéder à l'extraction du solvant restant en présence d'un gaz type CO₂ en phase supercritique comme l'a exposé la demanderesse dans la demande de brevet n° 94 07572. Le réseau poreux de polymère ainsi obtenu peut alors être fonctionnalisé si nécessaire en faisant diffuser des réactifs en phase gazeuse (chlorures d'acyle par exemple), puis rempli avec une nouvelle composition de cristaux liquides _{χ}L pouvant notamment contenir un colorant dichroïque.

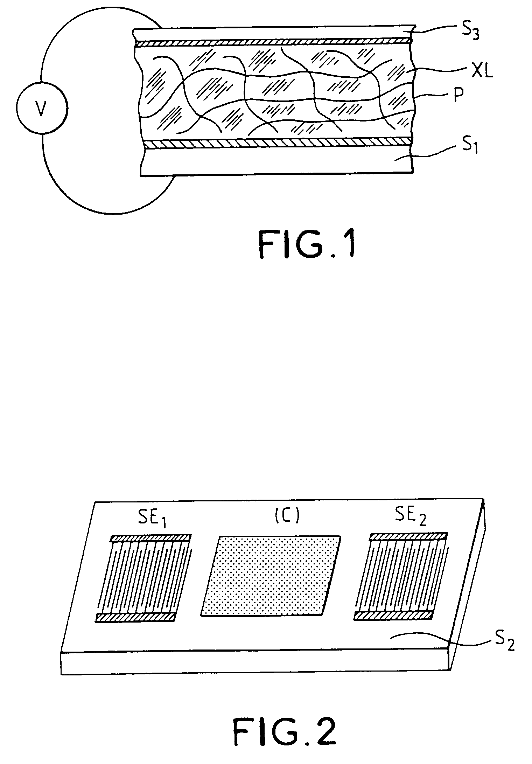

Dans le cadre de la réalisation d'un dispositif électrooptique tel que celui schématisé en figure 1, le film composite ainsi obtenu peut ensuite être recouvert d'un substrat transparent S₃ présentant une surface conductrice formant la seconde électrode de commande de manière à pouvoir appliquer les champs électriques de commande nécessaires au fonctionnement du dispositif électrooptique ainsi constitué.

Nous allons également décrire l'invention dans le cadre de la réalisation de film de matériaux à empreintes moléculaires particulièrement intéressants pour concevoir des capteurs chimiques hautement spécifiques.

Les matériaux sont constitués de polymère hautement réticulé, présentant une forte porosité, les pores représentant des sites de capture extrêmement sélectifs et adaptés à la détection de molécules très précises.

Pour réaliser des films de tels polymère on peut typiquement procéder de la manière suivante :
- une molécule G est mise en équilibre en solution avec des monomères fonctionnels, cette molécule G présente une structure chimique identique ou très proche des molécules G' que de tels capteurs peuvent détecter, les monomères fonctionnels étant choisis de telle sorte qu'ils forment avec les molécules G ainsi qu'avec les molécules G' des interactions spécifiques conduisant à des liaisons réversibles.

La composition précédemment décrite est déposée à la surface d'un substrat S₁, puis recouverte par un substrat S₂ de manière à former la cellule C.

On procède alors à la photopolymérisation des monomères fonctionnalisés, au travers d'un des substrats choisi transparent.

Après immersion de la cellule dans un solvant Σ₂, conduisant à l'élimination du substrat S₂, les molécules G sont extraites par un solvant adapté Σ_{G}, laissant un matériau réticulé poreux, comportant un grand nombre de cavités ayant une forme et une distribution de groupements fonctionnels parfaitement adaptées à la complexation d'entités G'.

Dans le cadre de la réalisation de capteurs à ondes acoustiques de surface, il est possible d'utiliser un substrat, type matériau piézoélectrique sur lequel sont préalablement déposées des jeux d'électrodes permettant la création d'ondes acoustiques de surface, la couche sensible constituée d'un film de polymère réticulé macroporeux étant située entre les deux séries d'électrodes SE₁ et SE₂ comme illustré en figure 2.

Pour cela le substrat S₁ peut être de plus grande dimension que le substrat S₂.

On dispose ainsi au centre du substrat S₁, la composition polymérisable, entre les deux jeux d'électrodes interdigitées, puis on dépose au niveau de cette couche sensible le substrat S₂ qui permet d'aplanir et de disposer d'une couche uniforme constituée de la composition voulue.

L'ensemble est alors soumis selon une étape du procédé de l'invention, à la photopolymérisation de la composition initiale puis à l'immersion de la cellule préalablement formée pour éliminer le substrat S₂.

Afin de favoriser l'adhérence de la couche de matériau à empreintes moléculaires le substrat S₁ piézoélectrique peut avantageusement être fonctionnalisé, par immersion dudit substrat notamment dans une solution renfermant des composés de type silane bien adaptés au type de monomères utilisés dans les matériaux à empreintes moléculaires.

Pour exemple, un substrat S₂ piézoélectrique de type quartz peut être fonctionnalisé par immersion dans une solution de 3-acryloxypropyltrimethoxysilane à 2% dans un mélange eau-éthanol acide acétique à pH = 5. Le substrat S₂ est ensuite lavé abondamment à l'éthanol, puis au chloroforme et séché.

La composition contenant les monomères et les molécules G servant de gabarit est alors déposée sur ledit substrat traité.

Dans ce cas, les monomères peuvent avantageusement être des monomères fonctionnels comportant au moins un fragment susceptible d'entrer dans une réaction de polymérisation ou de polycondensation et au moins un fragment susceptible d'établir une liaison hydrogène, une liaison ionique, une liaison de coordination, une liaison covalente réversible, ou tout autre type de liaison réversible et d'énergie suffisante, avec la molécule gabarit G. L'acide acrylique, l'acide méthacrylique, l'acide itaconique, l'acide acrylamido-2-méthyl 2 propane sulfonique -1, la N-vinyl pyrrolidone, l'acrylate d'hydroxy-2 éthyle ou d'hydroxy-2 propyle, l'acrylate d'aza-1 hydroxyméthyl-5 dioxabicyclo-3,7 (3, 3.0) octane, les vinyl pyridines, l'acide vinylacétique, l'acide vinyl-4 phényl boronique sont des exemples de tels monomères fonctionnels.

La molécule G servant de gabarit peut typiquement être un ion, une molécule organique d'origine biologique ou synthétique, un polypeptide, un polynucléotide, un polysaccharide ou tout autre espèce chimique que l'on peut avoir intérêt à détecter de façon sélective.

A titre d'exemple, une composite liquide constituée de 1 mmol de l'anilide de la L-p-aminophénylolanine, de 4 mmol d'acide méthacrylique, de 19 mmol de diméthacrylate d'éthylène glycol et de 2% d'amorceur photochimique (type Darocure 1173 Merck) dans 5,5 ml d'acétonitrile est déposée au centre du substrat S₁. On y dépose ensuite le substrat S₂ constitué par exemple d'un film de PVA (polyvinylalcool). La cellule ainsi formée peut être éclairée par le rayonnement ultraviolet (365 nm) d'une lampe type Dr Monle 400F. Lorsque la polymérisation est complète, le film de PVA constituant le substrat S₂ peut être dissous dans l'eau, puis l'extraction de l'anilide de la L-p-aminophénylalanine peut être effectuée par des lavages successifs à l'éthanol. Le substrat S₂ utilisé peut être égal un film de PET, pouvant être dissous dans le nitrobenzène.

## Revendications

1. Procédé de fabrication de film de matériau à base de polymère (P), caractérisé en ce qu'il comprend les étapes suivantes :
- la réalisation d'une cellule (C) comportant entre un substrat (S₁) et un substrat (S₂), une composition comprenant un précurseur du polymère (P), au moins un des substrats (S₁) et/ou (S₂) étant soluble dans un solvant (Σ₁) et/ou un solvant (Σ₂), ledit solvant (Σ₁) et/ou ledit solvant (Σ₂) étant non solvant du polymère (P) ;
- la polymérisation du polymère (P) à l'intérieur de la cellule (C) ;
- l'immersion de la cellule (C) dans le solvant (Σ₁) et/ou le solvant (Σ₂), de manière à éliminer le substrat (S₁) et/ou le substrat (S₂).

2. Procédé de fabrication de film de matériau à base de polymère (P) selon la revendication 1, caractérisé en ce que le polymère est un polymère réticulé à porosité ouverte.

3. Procédé de fabrication de film de matériau à base de polymère (P) selon la revendication 2, caractérisé en ce que le matériau à base de polymère (P) est un matériau composite comprenant du polymère (P) dans lequel est dispersé du cristal liquide (_{χ}L).

4. Procédé de fabrication de film de matériau à base de polymère (P) selon la revendication 3, caractérisé en ce qu'il comprend les étapes suivantes :
- la réalisation d'une cellule (C) comportant entre un substrat (S₁ ) et un substrat (S₂), une composition comprenant un monomère du polymère (P) et du cristal liquide (_{χ}Lo) ;
- la polymérisation du monomère du polymère (P) ;
- l'élimination d'un des deux substrats par la mise en solution de la cellule (C) dans le solvant dudit substrat ;
- l'élimination du cristal liquide (_{χ}Lo) dans le polymère (P) par l'immersion du film de polymère (P) et du substrat restant, dans un solvant (Σₒ) du cristal liquide (_{χ}Lo) ;
- l'introduction de cristal liquide (_{χ}L) dans le film de polymère (P).

5. Procédé de fabrication de film de matériau à base de polymère (P) selon la revendication 2, caractérisé en ce que le matériau est un matériau à empreintes moléculaires, macroporeux, réticulé présentant des cavités dont la configuration stérique et fonctionnelle est spécifiquement adaptée à la capture d'entités (G') au sein des cavités.

6. Procédé de fabrication de film de matériau à base de polymère (P) selon la revendication 5, caractérisé en ce qu'il comprend les étapes suivantes :
- la réalisation d'une cellule (C) comportant entre un substrat (S₁) et un substrat (S₂), une composition comprenant des monomères fonctionnels précurseur du polymère (P) et des molécules gabarit (G) formant avec les monomères des interactions spécifiques ;
- la polymérisation des monomères fonctionnels ;
- l'élimination d'un des deux substrats par la mise en solution de la cellule (C) dans le solvant dudit substrat ;
- l'élimination des molécules (G) par la mise en solution du film de polymère (P) et du substrat restant, dans un solvant (Σ_{G}) des molécules (G).

7. Dispositif électrooptique comprenant entre un substrat (S₁) et un substrat (S₃) un film de polymère dans lequel est dispersé du cristal liquide (_{χ}L) caractérisé en ce que :
- les substrats (S₁) et (S₃) comprennent des électrodes de commande de champ électrique à appliquer sur le film de polymère ;
- le film de polymère est obtenu selon le procédé de l'une des revendications 3 ou 4.

8. Capteur moléculaire comprenant un film de matériau à empreintes moléculaires à base de polymère réticulé macroporeux déposé à la surface d'un substrat (S₁ ) caractérisé en ce que :
- le substrat (S₁) est un matériau piézoélectrique comprenant de part et d'autre du film de matériau à empreintes moléculaires deux séries d'électrodes (SE₁) et (SE₂) de manière à induire et récupérer des ondes acoustiques de surface ;
- le film de matériau à empreintes moléculaires est obtenu selon le procédé de l'une des revendications 5 ou 6.
